# EUROPÄISCHE PATENTSCHRIFT

(11) **EP 3 663 648 B1**
(45) Veröffentlichungstag und Bekanntmachung des Hinweises auf die Patenterteilung: **31.08.2022**
(21) Anmeldenummer: 19211461.9
(22) Anmeldetag: 26.11.2019
(51) Int. Cl.: F23N 5/08

(54) **VERFAHREN ZUR REGELUNG DES MISCHUNGSVERHÄLTNISSES VON VERBRENNUNGSLUFT UND BRENNGAS BEI EINEM VERBRENNUNGSPROZESS**
METHOD FOR REGULATING THE MIXING RATIO OF COMBUSTION AIR AND COMBUSTION GAS IN A COMBUSTION PROCESS
DISPOSITIF DE RÉGULATION DU RAPPORT DE MÉLANGE DE L'AIR DE COMBUSTION ET DE GAZ DE COMBUSTION DANS UN PROCESSUS DE COMBUSTION

(30) Priorität: 18.01.2019 DE 102019101329; 05.12.2018 DE 102018130913
(43) Veröffentlichungstag der Anmeldung: 10.06.2020
(73) Patentinhaber: Vaillant GmbH, 42859 Remscheid (DE)
(72) Erfinder: Altendorf, Frank, 51467 Bergisch Gladbach (DE); Heitmann, Jan, 28285 Gevelsberg (DE); Resch, Sabrina, 51381 Leverkusen (DE); Staab, Fabian, 42283 Wuppertal (DE)
(74) Vertreter: Popp, Carsten

(56) Entgegenhaltungen:
- DE-A1- 19 509 704
- US-A- 5 829 962
- US-A1- 2010 330 516

## Beschreibung

Die Erfindung betrifft ein Verfahren zur Regelung des Mischungsverhältnisses von Verbrennungsluft und Brenngas in einem Verbrennungsraum, insbesondere in einem Warmwassergerät oder einer Heizung. Typischerweise wird Brenngas flächendeckend über ein Verteilernetz Endverbrauchern zur Verfügung gestellt, und es gibt europaweite Bestrebungen, bestehende Zusammensetzungen in vorhandenen Netzen zu ändern, beispielsweise durch Hinzufügen von Wasserstoff oder auch nur durch eine Änderung von Bezugsquellen für Brenngas.

Für eine vollständige und saubere Verbrennung kommt es auf das Mischungsverhältnis (Lambda) von Verbrennungsluft zu Brenngas an. Es muss mindestens so viel Verbrennungsluft zugegeben werden, dass alles Brenngas reagieren kann. Ein solches stöchiometrisches Verhältnis wird durch einen sogenannten Lambda-Wert von 1 beschrieben. Bei einem Mischungsverhältnis mit zu wenig Luft ist dieser Wert kleiner als 1, bei Luftüberschuss größer als 1. Aus verschiedenen Gründen wird für die hier beschriebenen Verbrennungsprozesse ein Lambda-Wert größer als 1, beispielsweise 1,1 bis 1,3, angestrebt. Ein für eine bestimmte Vorrichtung als günstig erkannter Wert sollte während des gesamten Verbrennungsprozesses möglichst genau eingehalten werden, was eine Regelung des Lambda-Wertes erforderlich machen kann.

Dazu ist es z. B. aus der DE 39 37 290 A1 bekannt, die elektrische Leitfähigkeit eines Flammenbereiches in einem Verbrennungsraum zu messen und das Mischungsverhältnis von Verbrennungsluft zu Brenngas so einzuregeln, dass die elektrische Leitfähigkeit innerhalb eines bestimmten Sollbereiches bzw. auf einem bestimmten Sollwert bleibt. Eine entsprechende Regeleinrichtung für einen Brenner mit einer lonisationselektrode ist z. B. aus der EP 1 154 202 A2 bekannt. In Anlehnung an in der Plasmaphysik verwendeten Langmuir-Sonde stellt die Messung der Leitfähigkeit mittels einer lonisationselektrode ebenfalls eine Langmuir-Sonde dar. Diese Mess-Methode ist invasiv, was bedeutet, dass die Verbrennung durch das Einbringen einer Elektrode beeinflusst wird.

Die bekannten Regelungen sind typischerweise für ein bestimmtes Brenngas mit einer festgelegten Zusammensetzung und festgelegtem Brennwert ausgelegt und daher nicht in der Lage, bei einer Änderung des Brenngases ohne Wartung und Neueinstellung weiterhin den Verbrennungsprozess richtig zu regeln. Bei der Einspeisung eines anderen Brenngases in ein Verteilernetz oder der Beimischung von Wasserstoff in ein Verteilernetz, wie sie europaweit geplant wird, müssten Geräte nach dem Stand der Technik neu eingestellt werden. Auf häufige Änderungen der Zusammensetzung könnten sie nur unzureichend reagieren, was zu schlechter Verbrennung, Schadstoffausstoß oder sogar Sicherheitsproblemen führen kann.

Es hat sich jedoch gezeigt, dass bei einer Verbrennung nicht nur Licht im sichtbaren Bereich, nämlich die sogenannte thermische Strahlung, ausgesandt wird, sondern dass auch im ultravioletten Bereich, in dem es nur geringe thermische Strahlung gibt, Emissionsstrahlung von verschiedenen durch die chemischen Reaktionen angeregten Molekülgruppen erzeugt wird. Besonders hervorzuheben sind dabei die CH*-Radikale und die OH*-Radikale, also Molekülreste mit besonderen chemischen und physikalischen Eigenschaften, die bei der Verbrennung entstehen und zur Strahlung angeregt werden. Diese Strahlung kann selektiv für beide Arten von Radikalen gefiltert und mit optischen Sensoren (ultraviolettempfindlichen Halbleitersensoren) nicht invasiv beobachtet werden.

Auf diesem Prinzip beruhende Messanordnungen und Regelungen sind beispielsweise aus der US 2010/330516 A1, der DE 195 09 704 A1 oder der US 5 829 962 A bekannt, allerdings nicht im Zusammenhang mit hohen oder gar wechselnden Anteilen an Wasserstoff in einem Brenngas.

Es ist daher Aufgabe der Erfindung, ein Verfahren bereitzustellen, das mittels nicht invasiver Messung eine genaue Regelung des Mischungsverhältnisses von Verbrennungsluft zu Brenngas (Lambda-Wert) ermöglicht, und zwar auch für unterschiedliche Zusammensetzungen des Brenngases, insbesondere auch bei Beimischung von mindestens 50% Wasserstoff bis zu reinem Wasserstoff.

Dabei sollen lange Standzeiten, einfache Wartung und eine hohe Betriebssicherheit erreicht werden können.

Diese Aufgaben werden durch ein Verfahren gemäß dem Anspruch 1 gelöst. Vorteilhafte Ausgestaltungen sind in den abhängigen Ansprüchen angegeben

Ausführungsformen und Vorteile werden in der nachfolgenden Beschreibung angegeben, insbesondere auch im Zusammenhang mit den Figuren.

Zur Durchführung des erfindungsgemäßen Verfahrens kann eine Vorrichtung dienen, die eingerichtet ist zur Beeinflussung oder Regelung des Mischungsverhältnisses (Lambda) von Verbrennungsluft zu einem gasförmigen Brennstoff (auch als Brenngas bezeichnet), die durch eine Brenngaszuleitung und eine Verbrennungsluftzuleitung einem Verbrennungsraum in einem Gehäuse zugeführt werden, wobei in der Verbrennungsluftzuleitung vor oder hinter der Zusammenführung mit dem gasförmigen Brennstoff ein Gebläse, typischerweise ein drehzahlgesteuertes Gebläse, angeordnet ist und an oder in dem Gehäuse mindestens ein erster optischer Filter und mindestens ein erster optischer Sensor vorhanden sind, wobei der erste optische Sensor so angeordnet ist, dass Licht aus dem Verbrennungsraum über den ersten optischen Filter auf den ersten Sensor gelangen kann.

Vorteilhaft ist es, wenn der erste optische Filter selektiv durchsichtig für mindestens einen vorgegebenen Wellenlängenbereich ist oder nur diesen reflektiert. Es kommen alle Arten von selektiven Filtern in Betracht, insbesondere optische Gitter, optisch selektive Spiegel, selektive Gläser oder selektive Beschichtungen, wobei auch eine Kombination aus Filter und Sensor, beispielsweise durch eine geeignete Glashülle oder Beschichtung des Sensors, möglich ist. Sollen zwei Wellenlängenbereiche beobachtet werden, so ist es vorteilhaft zwei optische Filter und zwei Sensoren einzusetzen. Aus Gründen der Sicherheit oder Redundanz können mehrere Sensoren und/oder Filter eingesetzt werden.

Insbesondere ist es auch möglich, Lichtleiter für zumindest einen Teil des Übertragungsweges des Lichtes einzusetzen. Glasfasern, die ein geeignetes Wellenlängenspektrum leiten, sind beispielsweise sehr temperaturbeständig, so dass sie sich besonders für die Führung von Licht aus einem Brennraum nach außen eignen. Auf diese Weise kann der Ort für die Anordnung von lichtempfindlichen Sensoren fast frei gewählt werden, beispielsweise auch in der Nähe eines Elektronikmoduls zur Signalauswertung. Mittels Lichtleitern ist es auch mit geringem Aufwand möglich, Signale von mehreren Stellen eines Brennraumes auszukoppeln und zu einem oder mehreren Filtern mit nachfolgendem Sensor zu leiten, wodurch die Messgenauigkeit und/oder Zuverlässigkeit bei der Regelung erhöht werden kann.

Zur Auswertung der Signale des Sensors oder der Sensoren sind diese vorteilhafterweise mit einem Elektronikmodul verbunden. Dort werden die Sensorsignale ausgewertet und weiterverarbeitet und können im Dauerbetrieb als Regelgröße verwendet werden.

Bevorzugt sind das Gebläse und/oder ein in Reihe dazu in der Verbrennungsluftzuleitung angeordnetes Ventil dazu eingerichtet, einen in den Verbrennungsraum strömenden Verbrennungsluftdurchfluss stufenweise und/oder kontinuierlich zu verändern. Dies ermöglicht sowohl eine Kalibrierung der Regelung als auch eine kontinuierliche Einstellung des Lambda-Wertes im Dauerbetrieb, wobei die Stellung des Ventils oder die Leistung des Gebläses als Stellgröße dienen, beispielsweise über eine Drehzahlregelung des Gebläses. Es sei darauf hingewiesen, dass die durch eine Änderung des Verbrennungsluftdurchflusses erzielbaren Effekte, wie sie im Folgenden beschrieben werden, auch durch eine entgegengesetzte Änderung des Brenngasdurchflusses erreicht werden können. Auch diese Art der Regelung wird von der Erfindung umfasst.

Bevorzugt stehen das Gebläse, gegebenenfalls auch vorhandene Durchflusssensoren und/oder Stellventile in der Verbrennungsluftzuleitung, und der erste optische Sensor mit einem gemeinsamen Elektronikmodul in Verbindung, wobei das Elektronikmodul die Verarbeitung des Sensorsignals und die Regelung beinhaltet. Besonders vorteilhaft ist es, wenn das Elektronikmodul alle erforderlichen Einrichtungen zur Kalibrierung, Signalverarbeitung und Regelung enthält, was typischerweise in einem Mikroprozessor verwirklicht werden kann.

Da hier bevorzugt ein optischer Halbleitersensor eingesetzt wird, ist es vorteilhaft, wenn der optische Sensor mit einer Kühlung versehen ist und/oder in einem Bereich angeordnet ist, in dem die Temperatur immer (während des Betriebs des Verbrennungsraumes) unter 70° C, vorzugsweise unter 60° C, liegt. Dabei kann es sich um eine Kühlung durch Wärmeableitung an die Umgebung, eine Luftkühlung, z. B. durch die zugeführte Verbrennungsluft, eine Flüssigkeitskühlung oder dergleichen handeln. Wichtig ist nur, dass der Sensor eine vorgegebene Maximaltemperatur nie überschreitet, damit er nicht beschädigt oder zerstört wird.

Zur Lösung der gestellten Aufgabe dient erfindungsgemäß ein Verfahren zur Beeinflussung oder Regelung des Mischungsverhältnisses (Lambda) von Verbrennungsluft zu einem gasförmigen Brennstoff, der mindestens 50% Wasserstoff enthält oder reiner Wasserstoff ist, die gemeinsam in einem Verbrennungsraum verbrannt werden, wobei bei der Verbrennung entstehendes Licht, und zwar nur der Wellenlängenbereich für Emissionen von OH*-Radikalen, selektiv gefiltert und von mindestens einem ersten optischen Sensor in ein elektrisches Sensorsignal umgewandelt wird, dessen Stärke in einem Elektronikmodul ausgewertet wird, wobei eine Zufuhr von Verbrennungsluft zu dem Verbrennungsraum verändert und die dadurch bewirkte Änderung der Stärke des Sensorsignals ausgewertet wird und wobei die Zufuhr von Verbrennungsluft von dem Ergebnis der Auswertung abhängig eingestellt oder geregelt wird. Für Brenngase mit einem Anteil von mehr als 50 % Wasserstoff oder aus reinem Wasserstoff ist es vorteilhaft, dass nur der Wellenlängenbereich für Emissionen von OH*-Radikalen ausgefiltert und ausgewertet wird. Während es für bisher übliche Brenngase eher sinnvoll ist, nur die Emissionen von CH*-Radikalen zu beobachten und zur Regelung zu nutzen, wird diese Art der Regelung bei höheren Wasserstoffanteilen zunehmend ungenau und kann dann durch Messungen allein in dem Wellenlängenbereich der OH*-Radikale ersetzt werden.

Vorteilhaft ist es dabei, wenn das optische Filter den Wellenlängenbereich durchlässt, der typisch für Emissionen von OH*-Radikalen ist, nämlich etwa 280 - 320 nm [Nanometer]. Der durchgelassene Wellenlängenbereich kann auch noch weiter eingeschränkt werden, wenn dadurch Störungen der Messung verringert werden, beispielsweise auf 290 - 310 nm.

Bevorzugt wird die Zufuhr von Verbrennungsluft in Abhängigkeit von der Stärke des Sensorsignals geregelt. Das Sensorsignal ist dabei die Regelgröße, die Leistung des Gebläses oder die Stellung eines Ventils in der Verbrennungsluftzuleitung sind die Stellgröße. Grundsätzlich ist statt der Regelung der Verbrennungsluft auch die Regelung der Brenngaszufuhr bei konstanter Zufuhr von Verbrennungsluft möglich, jedoch ist diese Art der Regelung aus verschiedenen Gründen unüblich und nur für besondere Fälle geeignet.

Da die Erfindung sich auch für verschiedene Brenngase und wechselnde Zusammensetzung von Brenngasen eignen soll und weil im Laufe der Zeit Verschmutzungen und andere Einflüsse die Regelung verstellen können, ist eine automatische Kalibrierung von besonderem Vorteil. Zur Kalibrierung der Regelung wird eine Verbrennung mit einem geeigneten Verbrennungsluftüberschuss begonnen und die Verbrennungsluftzufuhr schrittweise oder kontinuierlich gedrosselt, wobei die Stärke des elektrischen Signals in Abhängigkeit von der Verbrennungsluftzufuhr beobachtet wird, um einen Wendepunkt (Umkehrung der Krümmung) im Verlauf des Sensorsignals aufzufinden, der einem besonders geeigneten Mischungsverhältnis (Lambda) entspricht. In diesem Wendepunkt erreichen mathematisch betrachtet die erste Ableitung des Sensorsignals nach der Zeit ein Maximum und die zweite Ableitung nach der Zeit wird zu Null. Anders ausgedrückt ändert sich das Sensorsignal in diesem Punkt am stärksten, wenn sich die Verbrennungsluftzufuhr und damit der Lambda-Wert um einen bestimmten Betrag ändert. Ein solcher Wendepunkt kann durch einfache Messschritte und Vergleiche der gemessenen Werte aufgefunden werden.

Vorteilhafterweise wird die Kalibrierung in vorgebbaren Intervallen oder bei Bedarf wiederholt. Das kann sogar bei Beginn jedes Verbrennungsprozesses durchgeführt werden, indem eben mit Verbrennungsluftüberschuss gestartet und dann die Luftzufuhr verringert wird, bis der Wendepunkt beim Überschreiten ermittelt ist, auf den dann eingeregelt werden kann.

Vorteilhaft ist es und bei typischen Brennern auch üblich, das Gebläse drehzahlgesteuert bzw. drehzahlgeregelt zu gestalten. Die Änderung der Zufuhr von Verbrennungsluft wird durch eine schrittweise oder kontinuierliche Änderung einer Drehzahl des Gebläses durchgeführt.

Es kann eine Lambdaregelung (z. B. nach Art eines Elektronikmoduls) zur Einstellung von Verbrennungsluft und einem gasförmigen Brennstoff vorgesehen sein, die eingerichtet ist zur Durchführung des hier beschriebenen Verfahrens. Es kann ein Computerprogramm (z. B. im Elektronikmodul) vorgesehen sein, welches eingerichtet ist, alle Schritte des hier vorgeschlagenen Verfahrens (insbesondere gemäß den Verfahrensansprüchen) auszuführen. Weiter kann ein maschinenlesbares Speichermedium (z. B. das Elektronikmodul) vorgesehen sein, auf dem ein solches Computerprogramm gespeichert ist.

Ein schematisches Ausführungsbeispiel der Erfindung, auf das diese jedoch nicht beschränkt ist, und die Funktionsweise des erfindungsgemäßen Verfahrens werden nun anhand der Figuren detailliert erläutert. Es stellen dar:
- Fig. 1:: schematisch eine Vorrichtung,
- Fig. 2:: ein Diagramm zur Veranschaulichung des Spektrums der Strahlungsemissionen bei einer Verbrennung für unterschiedliche Verbrennungsleistungen,
- Fig. 3:: vier Diagramme für unterschiedliche Leistungsstufen bei der Verbrennung und für unterschiedliche Brenngase, wobei jeweils Signalstärke gegen den Lambda-Wert aufgetragen ist,
- Fig. 4:: ein Diagramm zum Verlauf der Strahlungsintensität der CH*-Radikale in Abhängigkeit von der Zeit bei einem Kalibriervorgang und einer Leistung von 20 kW [Kilowatt],
- Fig. 5:: ein Diagramm zum Verlauf des Lambda-Wertes in Abhängigkeit von der Zeit bei einem Kalibriervorgang mit Beobachtung der Strahlungsintensität der CH*-Radikale und einer Leistung von 20 kW,
- Fig. 6, 7:: entsprechende Diagramme zu Figuren 4 und 5 für eine Leistung von 15 kW,
- Fig. 8, 9:: entsprechende Diagramme zu Figuren 4 und 5 für eine Leistung von 10 kW,
- Fig. 10, 11:: entsprechende Diagramme zu Figuren 4 und 5 für eine Leistung von 5 kW,
- Fig. 12:: ein Diagramm zur Veranschaulichung der Messgenauigkeit bei einer Kalibrierung, aufgetragen ist der Lambda-Wert gegen die Zeit, und
- Fig. 13:: ein Diagramm zugehörig zu Figur 12, aufgetragen ist die gemessene Änderung der Signalstärke gegen die Zeit.

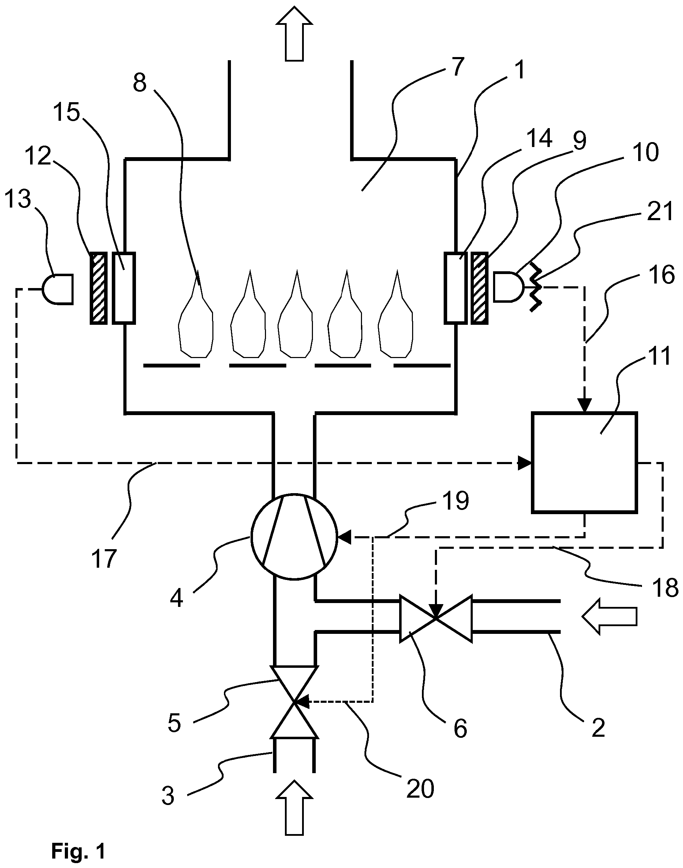

Figur 1 zeigt schematisch ein Ausführungsbeispiel einer für die Durchführung des erfindungsgemäßen Verfahrens geeigneten Vorrichtung, insbesondere einen Warmwasserbereiter oder Heizungsbrenner. In einem Gehäuse 1 ist ein Brennraum 7 angeordnet, in dem ein Brenngas mit Verbrennungsluft verbrannt werden kann. Eine Brenngaszuleitung 2 und eine Verbrennungsluftzuleitung 3 dienen der Zuführung der beiden Komponenten, die im Allgemeinen schon vor dem Brennraum 7 zusammengeführt werden, was aber nicht immer der Fall ist. Ein Brenngasventil 6 dient zur Absperrung und/oder Steuerung des Verbrennungsgases und ein Verbrennungsluftventil 5 zur Absperrung und/oder Steuerung der Verbrennungsluft. Ein Gebläse 4, insbesondere ein drehzahlgesteuertes Gebläse, ist in der Verbrennungsluftzuleitung 3 vor oder nach der Zusammenführung mit dem Brenngas angeordnet. Nach Zündung eines geeigneten Gemisches von Brenngas und Verbrennungsluft entsteht im Verbrennungsraum 7 ein Flammenbereich 8, der ein breites Spektrum an optischer Strahlung aussendet, nämlich einerseits thermische Strahlung und andererseits Strahlung verschiedener Emissionslinien, die insbesondere charakteristisch für bestimmte chemische Komponenten sind und sich auch im ultravioletten (UV) Teil des Spektrums befinden. Über einen ersten optischen Filter 9 in oder an dem Gehäuse 1 können Strahlen eines bestimmten Spektralbereiches ausgefiltert werden, so dass nur noch die durchgelassenen (oder reflektierten) Strahlen zu einem ersten optischen Sensor 10, insbesondere einer lichtempfindlichen Diode, gelangen. Der Sensor 10 kann durch eine Kühlung 21 auf einer geeigneten Temperatur für seinen Betrieb, z. B. unterhalb von 70° C oder sogar unter 60° C, gehalten werden. Über eine erste Sensor-Verbindungsleitung 16 gelangt ein vom ersten Sensor 10 gemessenes Signal zu einem Elektronikmodul 11, welches zur Auswertung von Messsignalen und zur Regelung dient. Über eine Gebläse-Verbindungsleitung 19 kann das Gebläse zur Kalibrierung angesteuert und im Betrieb geregelt werden. Alternativ oder zusätzlich können auch das Verbrennungsluftventil 5 über eine Verbrennungsluftventil-Zuleitung 20 oder das Brenngasventil 6 über eine Brenngasventil-Zuleitung 18 angesteuert werden. Sofern nicht nur ein Spektralbereich überwacht und zur Auswertung herangezogen werden soll, können ein zweiter optischer Filter 12, eine zweite Sensor-Verbindungsleitung 17 und ein zweiter optischer Sensor 13 vorgesehen werden, bevorzugt an der dem ersten Sensor 10 gegenüberliegenden Seite des Gehäuses 1, oder benachbart zu dem ersten Sensor 10. Da die Sensoren 10, 13 nur in einem begrenzten Temperaturbereich funktionsfähig sind, kann es erforderlich sein, in dem Gehäuse 1 für ultraviolettes Licht durchlässige Fenster 14, 15, z. B. aus einem geeigneten hitzebeständigen Glas, vorzusehen, so dass die Filter 9, 12 und die Sensoren 10, 13 außerhalb des Gehäuses 1 in einem kühleren Bereich angeordnet werden können.

Alle im Folgenden anhand von CH*-Radikalen beschriebenen Vorgänge können in gleicher Weise auch für den Emissionsbereich der OH*-Radikale, auch als OH(A-X) bezeichnet, durchgeführt werden, weil dies für Brenngase mit hohem Wasserstoffanteil oder für reinen Wasserstoff günstiger sein kann. Es ist auch möglich, beide Emissionsbereiche zu überwachen und auszuwerten, was zusätzliche Informationen liefern kann. Insbesondere kann das Verhältnis der Signalstärken von OH*-Radikalen und CH*-Radikalen Informationen über die Zusammensetzung, insbesondere den Wasserstoffanteil eines Brenngases, liefern oder eine Entscheidung darüber ermöglichen, welche Signale besser für eine Regelung geeignet sind.

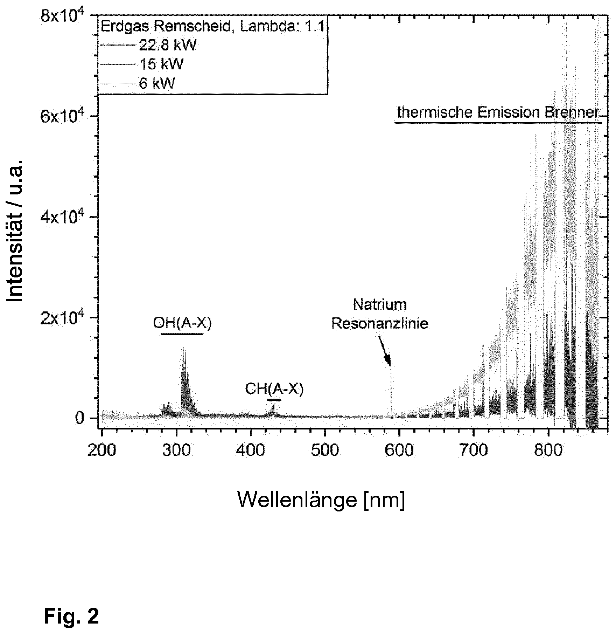

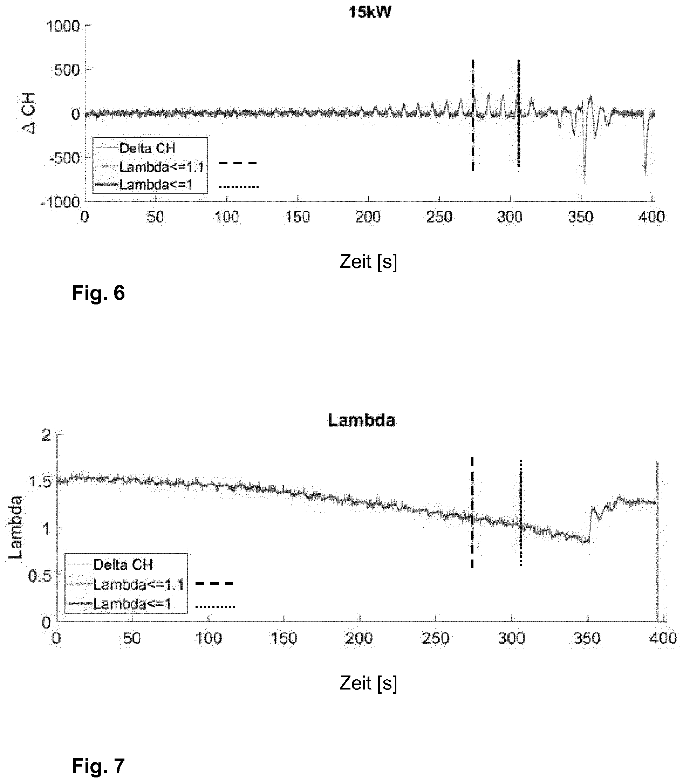

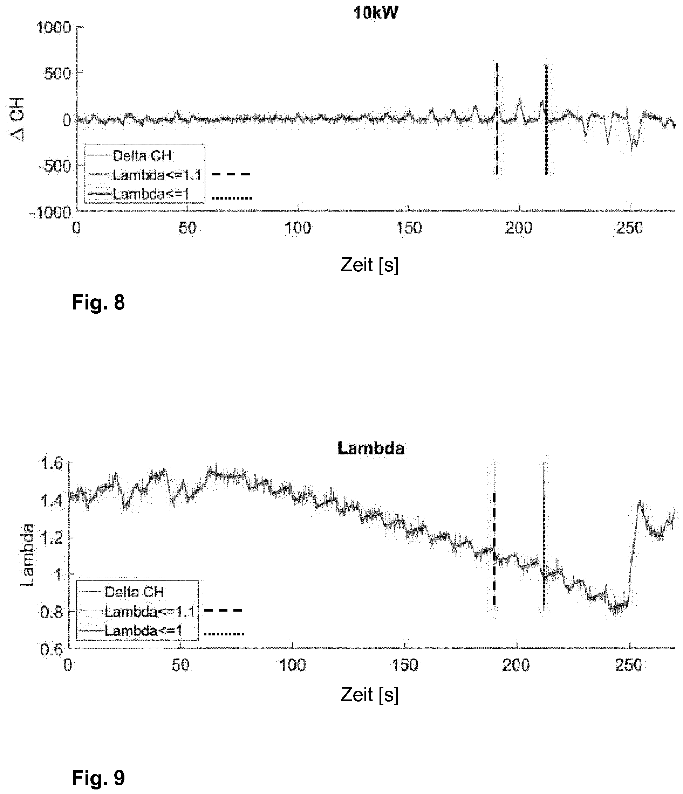

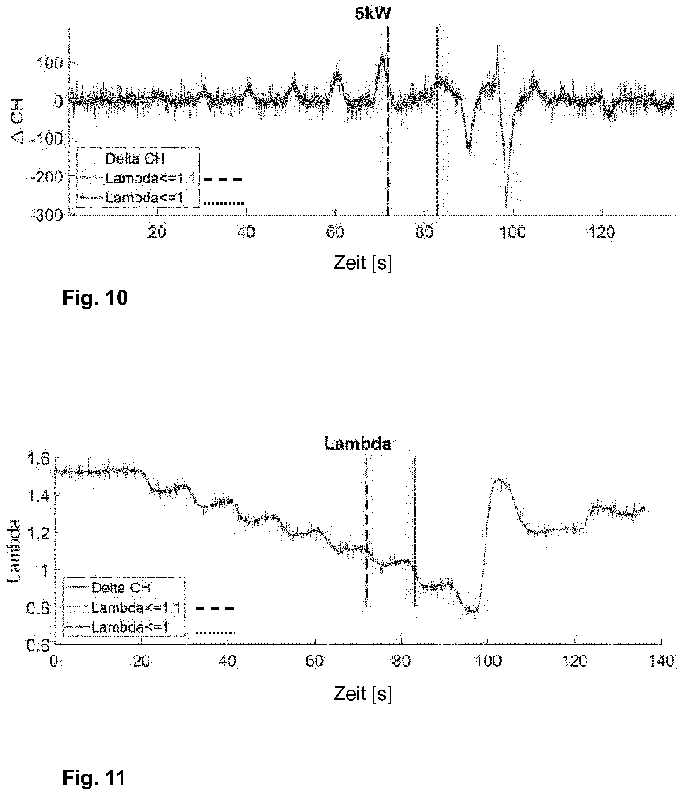

Das erfindungsgemäße Verfahren lässt sich anhand der Figuren 2 bis 13 wie folgt beschreiben: Für die Detektion des für CH*-Radikale, auch mit CH(A-X) bezeichnet, wie sie im Wellenlängenbereich 420 bis 440 nm in Figur 2 auftreten, wird eine UV-Sonde (aus Filter für den betreffenden Wellenlängenbereich und Sensor) eingesetzt. Mittels des im hier beschriebenen Beispiel eingesetzten Fotomaterials ist eine Detektion von Photonen in dem Spektralbereich 350-500 nm, in dem die CH*-Radikale Strahlung aussenden, möglich. Die aufgenommenen Photonen generieren einen Diodenstrom, welcher der relativen Signalstärkemessung der CH*-Radikale dient. Dieser Strom wird über einen Widerstand von z. B. 470 Ω in ein Spannungssignal umgewandelt, welches von einem Prozessor im Elektronikmodul ausgewertet wird.

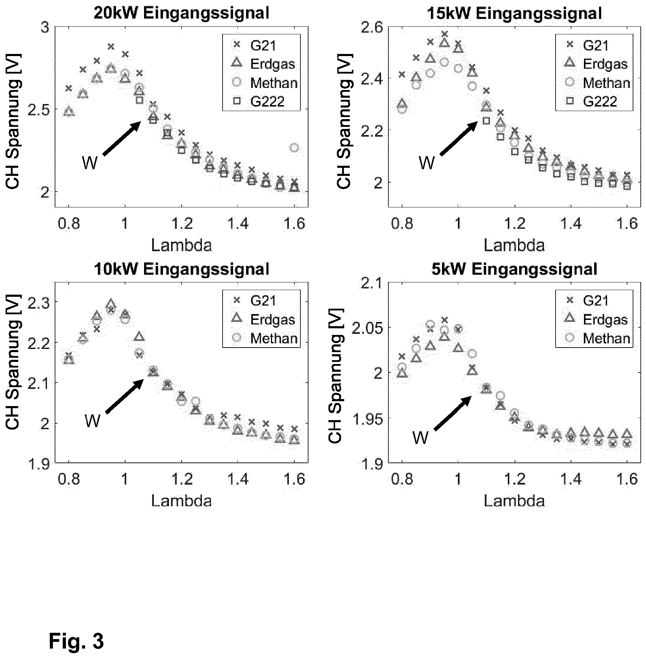

Die Signale für die CH*-Radikale (vgl. Figur 3) wurden für die Gase G21, G222, Methan und Erdgas (Remscheid) und für die Belastungsstufen 20, 15, 10 und 5 kW aufgenommen. Die Diagramme zeigen den gemittelten Spannungswert (Signalstärke) für die Lambda-Wert-Variation von Lambda = 1,60 bis Lambda = 0,80 in 0,05er-Schritten (ausgenommen G222). Es ist ersichtlich, dass diese Signale nahezu unabhängig vom verwendeten Brenngas sind. Damit eine sichere Detektion des Arbeitspunktes gewährleistet wird, wird eine Detektion des Wendepunktes der entstehenden Signalkurve durchgeführt. Somit wird nach der Zündung des Verbrennungsprozesses in konstanten Zeitabständen die Gebläse-Drehzahl des hier verwendeten Gebläses in der Verbrennungsluftzuleitung verringert, bis der Wert der maximalen Steigung in der Signalkurve (belastungsabhängig) erreicht ist. Die hierfür benötigte Zeit wird gemessen, welche in Verbindung mit dem Wert des Wendepunktes und dem absoluten Wert der Signalstärke der CH*-Radikale-Strahlung für eine Identifizierung des Lambda-Wertes sowie auch der aktuellen Belastung dient. Über z. B. eine Lookup-Table oder einen entsprechenden elektronischen Speicher im Elektronikmodul wird nun die benötigte Drehzahl für den gewünschten Sollwert von Lambda (z. B. 1,25) eingestellt. Zur Sicherheitsüberprüfung wird dieses Verfahren z. B. alle N Minuten durchgeführt, um die Rahmenbedingungen und den aktuellen Arbeitspunkt jeweils zu verifizieren.

Das Regelkonzept kann wie folgt zusammengefasst werden: Eine im Elektronikmodul gespeicherte Vorsteuer-Kennlinie beschreibt Gebläse-Drehzahl und Signalstärke des emittierten Lichtes der CH*-Radikale für eine optimale Verbrennung unter Referenzbedingungen (alternativ zur Gebläse-Drehzahl kann auch die Verbrennungsluftmenge verwendet werden). Eine Regelung im Elektronikmodul passt die Verbrennungsluftmenge so an, dass die gewünschte Signalstärke der CH*-Radikale-Strahlung erreicht wird, d. h. die Verbrennung mit dem gewünschten Gas-Luft-Verhältnis abläuft. Ein Kalibriervorgang überprüft und adaptiert eine ggf. gespeicherte Vorsteuer-Kennlinie an die aktuellen Verbrennungsbedingungen (Zusammensetzung des Verbrennungsgases, Gas-, Luftdichte etc.) Das Ergebnis des Kalibriervorganges kann z. B. ein Korrekturfaktor sein, mit dem die Vorsteuer-Kennlinie korrigiert wird.

Ein zugehöriger Kalibriervorgang läuft beispielsweise wie folgt ab:

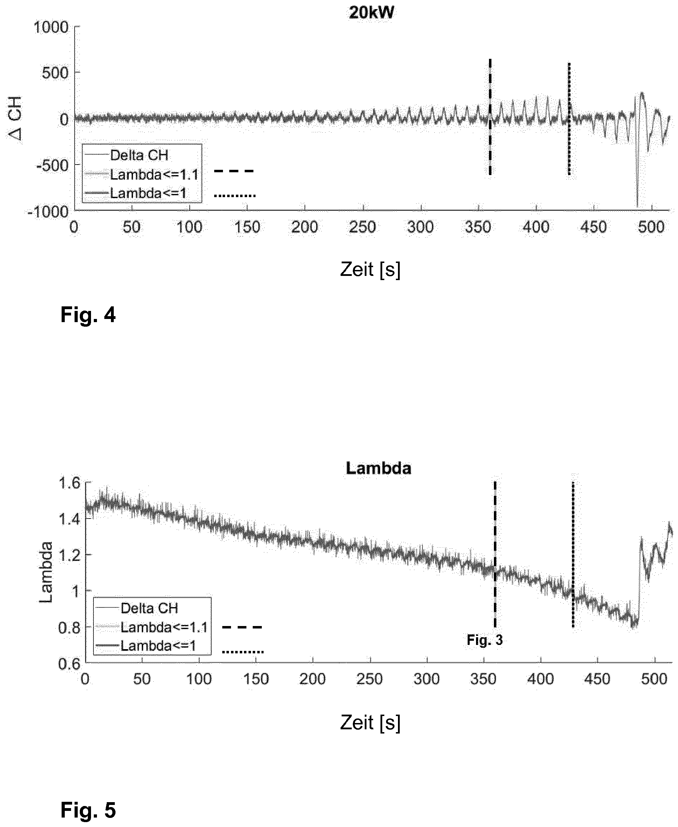

Stelle die Gebläse-Drehzahl und Standardwerte der Vorsteuerung ein, z. B. für Art des Brenngases, Temperatur, Druck oder ähnliche Parameter. Überprüfe mittels des absoluten Wertes der Signalstärke der CH*-Radikale-Strahlung und der Gebläse-Drehzahl/Verbrennungsluftmenge, ob die Verbrennung mager genug ist. Starte zeitgesteuerte, insbesondere schrittweise, Reduzierung der Gebläse-Drehzahl/Verbrennungsluftmenge. Bei Erreichung des Wendepunktes W (siehe z. B. Markierungen in Figur 4) berechne die Zeitdifferenz und identifiziere das aktuelle Lambda sowie die aktuelle Drehzahl/Verbrennungsluftmenge (der Wendepunkt ist charakterisiert durch Erreichen des Maximums der Änderung der Signalstärke der CH*-Radikal-Strahlung bei Reduktion der Verbrennungsluftmenge und liegt je nach Belastungszustand zwischen 1,2 > Lambda > 1,05). Berechne einen zugehörigen Korrekturfaktor für die Vorsteuerkennlinie, um den gewünschten Sollwert für Lambda der Verbrennung einzustellen. Mit dem Kalibriervorgang werden auch Veränderungen am optischen und elektronischen Signalweg (Verschmutzungen, Alterung, etc. an Filter und Sensor) automatisch erkannt und korrigiert. Nach N Minuten starte erneut mit dem Kalibriervorgang.

In Abb. 4 bis 13 sind jeweils die zeitliche Änderung des Lambdawertes und die zeitliche Änderung der Signalstärke der CH*-Radikale-Emissionen gegenübergestellt. Hierbei wurde alle 10 Sekunden die Drehzahl eines Verbrennungsluft-Gebläses um ein Hundertstel (1 %) des Ausgangswertes verringert. Zudem wurde markiert, ab wann ein zeitlich kritischer Lambda-Bereich (1,10 - 1,00) auftritt, in dem die Detektion des Wendepunktes (maximale Änderungsrate) stattfinden soll. Der Bereich ist jeweils durch senkrechte Linien eingegrenzt. Die Auswertungen zeigen, dass der Wendepunkt W für alle Belastungen im zulässigen Bereich liegt. Zu beachten ist, dass ab einem Lambda-Wert von 0,95 im Ausführungsbeispiel die Drehzahl drastisch erhöht wurde, wodurch eine starke Änderung der Signalstärke am Ende des dargestellten Zeitintervalls stattfindet.

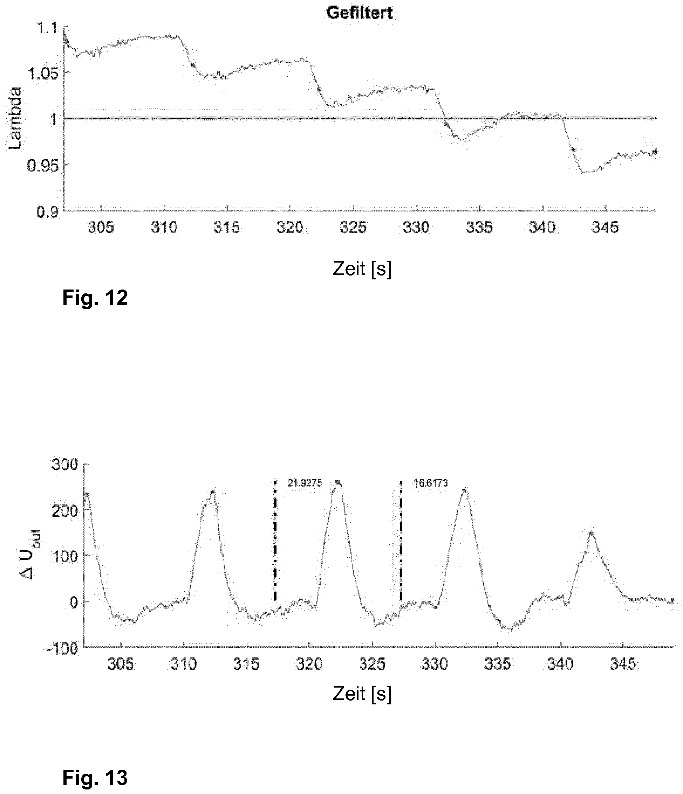

Damit Messfehler verringert werden und die zeitliche Auflösung verbessert wird, wurde in dem Elektronikmodul im zur Auswertung genutzten Modell ein Filter für das Signal der CH*-Radikale hinterlegt. Wie Figuren 12 und 13 zeigen, ist somit eine klare Identifikation des Lambdaüberganges von 1,05 hin zu 1,00 möglich. Durch die gesammelten Erkenntnisse der Analyse des CH-Signales ist es sogar möglich, mit der beschriebenen Sensorik weitere Regelungssysteme zu etablieren oder Informationen zu gewinnen.

So können die gemessenen Signalstärken auch ausgewertet werden, um eine Entstehung von CO (Kohlenmonoxid) sicher zu verhindern. Zudem kann das Verhältnis aus OH*/CH*-Signalstärken als belastungsunabhängiges Regelungssignal mit gleicher Lambdaabhängigkeit wie das CH*-Signal genutzt werden. Hierbei liefert der absolute Wert des Verhältnisses in Verbindung mit den Einzelsignalen Möglichkeiten für die Identifizierung der thermischen Belastung eines Brenners und die Bestimmung des Lambda-Wertes.

Schließlich kann auch eine Kombination vorhandener lonisationsmessungen und anderer Messungen nach dem Stand der Technik mit den erfindungsgemäßen Messungen realisiert werden, wodurch mehr Informationen über den Verbrennungsvorgang gewonnen und eine genauere Auflösung des Lambda-Wertes mit entsprechend präziser Regelung erreicht werden können.

Die Erfindung eignet sich insbesondere für Brenner im Leistungsbereich zwischen 5 und 50 kW, vorzugsweise Standgeräte und Wandgeräte in Haushalten mittlerer Größe, die mit einem Verbrennungsgas aus einem Versorgungsnetz betrieben werden. Sie kann aber auch für noch kleinere Leistungen eingesetzt werden. Selbst bei einer sich häufig oder gelegentlich ändernden Zusammensetzung des Verbrennungsgases ist eine zuverlässige Regelung möglich. Auch können Verschmutzungen und langsame Veränderungen an optischen oder elektronischen Bauteilen durch periodische Kalibrierung ausgeglichen werden.

### Bezugszeichenliste

- 1: Gehäuse
- 2: Brenngaszuleitung
- 3: Verbrennungsluftzuleitung
- 4: Gebläse (drehzahlgeregelt)
- 5: Verbrennungsluftventil
- 6: Brenngasventil
- 7: Verbrennungsraum
- 8: Flammenbereich
- 9: Erster optischer Filter
- 10: Erster optischer Sensor
- 11: Elektronikmodul
- 12: Zweiter optischer Filter
- 13: Zweiter optischer Sensor
- 14: Erstes UV-durchlässiges Fenster
- 15: Zweites UV-durchlässiges Fenster
- 16: Erste Sensor-Verbindungsleitung
- 17: Zweite Sensor-Verbindungsleitung
- 18: Brenngasventil-Verbindungsleitung
- 19: Gebläse-Verbindungsleitung
- 20: Verbrennungsluftventil-Zuleitung
- 21: Kühlung

## Patentansprüche

1. Verfahren zur Beeinflussung oder Regelung des Mischungsverhältnisses (Lambda) von Verbrennungsluft und einem gasförmigen Brennstoff mit einem Anteil von mehr als 50 % Wasserstoff oder reinem Wasserstoff, die gemeinsam in einem Verbrennungsraum (7) verbrannt werden, wobei bei der Verbrennung entstehendes Licht, und zwar nur der Wellenlängenbereich für Emissionen von OH*-Radikalen, selektiv ausgefiltert und von mindestens einem ersten optischen Sensor (10) in ein elektrisches Sensorsignal umgewandelt wird, dessen Stärke in einem Elektronikmodul (11) ausgewertet wird, wobei eine Zufuhr von Verbrennungsluft und/oder gasförmigem Brennstoff zu dem Verbrennungsraum (7) verändert und die dadurch bewirkte Änderung des Sensorsignals ausgewertet wird und wobei die Zufuhr von Verbrennungsluft und/oder gasförmigem Brennstoff von dem Ergebnis der Auswertung abhängig eingestellt oder geregelt wird.

2. Verfahren nach Anspruch 1, wobei ein optisches Filter (9) den selektiv ausgefilterten Wellenlängenbereich durchlässt oder reflektiert, der typisch für OH*-Radikale ist, nämlich etwa 280 - 320 nm.

3. Verfahren nach Anspruch 1 oder 2, wobei die Zufuhr von Verbrennungsluft und/oder gasförmigem Brennstoff in Abhängigkeit von der Stärke des Sensorsignals geregelt wird.

4. Verfahren nach einem der vorhergehenden Ansprüche, wobei eine Kalibrierung der Regelung erfolgt, und wobei zur Kalibrierung der Regelung eine Verbrennung mit einem geeigneten Verbrennungsluftüberschuss begonnen und die Verbrennungsluftzufuhr schrittweise oder kontinuierlich gedrosselt wird und wobei die Stärke des elektrischen Signals in Abhängigkeit von der Verbrennungsluftzufuhr beobachtet wird, um einen Wendepunkt im Verlauf des Sensorsignals aufzufinden, der einem besonders geeigneten Mischungsverhältnis (Lambda) entspricht.

5. Verfahren nach Anspruch 4, wobei die Kalibrierung in vorgebbaren Intervallen oder bei Bedarf wiederholt wird.

6. Verfahren nach einem der vorhergehenden Ansprüche, wobei die Änderung der Zufuhr von Verbrennungsluft durch eine schrittweise oder kontinuierliche Änderung einer Drehzahl eines Gebläses (4) erfolgt.

## Claims

1. Method for influencing or regulating the mixing ratio (lambda) of combustion air and a gaseous fuel with a proportion of more than 50 % hydrogen or pure hydrogen, which are burned together in a combustion chamber (7), wherein light produced during combustion, and only in the wavelength range for emissions of OH^{∗} radicals, is selectively filtered and converted by at least a first optical sensor (10) into an electrical sensor signal, the strength of which is analysed in an electronic module (11), wherein a supply of combustion air and/or gaseous fuel to the combustion chamber (7) is modified and the resulting change in the sensor signal is analysed and wherein the supply of combustion air and/or gaseous fuel is adjusted or regulated on the basis of the result of the analysis.

2. Method according to claim 1, wherein an optical filter (9) allows to pass or reflects the selectively
filtered wavelength range, which is typical of OH^{∗} radicals, namely approximately 280 - 320 nm.

3. Method according to claim 1 or 2, wherein the supply of combustion air and/or gaseous fuel is regulated on the basis of the strength of the sensor signal.

4. Method according to any of the preceding claims, wherein a calibration of the regulation is performed and wherein, in order to calibrate the
regulation, combustion is begun with suitable excess combustion air and the combustion air supply is throttled gradually or continuously and wherein the strength of the electrical signal is observed on the basis of the combustion air supply, in order to detect an inflection point in the development of the sensor signal, which corresponds to a particularly suitable mixing ratio (lambda).

5. Method according to claim 4, wherein calibration is repeated at predeterminable intervals or as required.

6. Method according to any of the preceding claims, wherein modification of the supply of combustion air takes place by means of a gradual or continuous change in the speed of a fan (4).

## Revendications

1. Procédé permettant d'influencer ou de réguler le rapport de mélange (lambda) de l'air de combustion et d'un combustible gazeux contenant plus de 50 % d'hydrogène ou de l'hydrogène pur, qui sont brûlés ensemble dans une chambre de combustion (7), dans lequel la lumière produite lors de la combustion, à savoir uniquement la plage de longueurs d'onde pour les émissions de radicaux OH^{∗}, est filtrée de manière sélective et convertie par au moins un premier capteur optique (10) en un signal de capteur électrique, dont l'intensité est évaluée dans un module électronique (11), dans lequel une alimentation en air de combustion et/ou en combustible gazeux vers la chambre de combustion (7) est modifiée et la modification ainsi provoquée du signal de capteur est évaluée, et dans lequel l'alimentation en air de combustion et/ou en combustible gazeux est réglée ou régulée en fonction du résultat de l'évaluation.

2. Procédé selon la revendication 1, dans lequel un filtre optique (9) laisse passer ou réfléchit la plage de longueurs d'onde filtrée de manière sélective
qui est typique pour les radicaux OH^{∗}, à savoir environ 280 à 320 nm.

3. Procédé selon la revendication 1 ou 2, dans lequel l'alimentation en air de combustion et/ou en combustible gazeux est régulée en fonction de l'intensité du signal de capteur.

4. Procédé selon l'une quelconque des revendications précédentes, dans lequel un étalonnage de la régulation est effectué, et dans lequel, pour l'étalonnage de la régulation, une combustion est commencée avec un excès d'air de combustion approprié et l'alimentation en air de combustion est réduite de manière progressive ou continue, et dans lequel l'intensité du signal électrique est observée en fonction de l'alimentation en air de combustion afin de trouver un point d'inflexion dans l'évolution du signal de capteur qui correspond à un rapport de mélange (lambda) particulièrement approprié.

5. Procédé selon la revendication 4, dans lequel l'étalonnage est répété à des intervalles pouvant être prédéterminés ou en cas de besoin.

6. Procédé selon l'une quelconque des revendications précédentes, dans lequel la modification de l'alimentation en air de combustion est effectuée via une modification progressive ou continue d'une vitesse de rotation d'un ventilateur (4).
